# EUROPÄISCHE PATENTANMELDUNG

(11) **EP 4 198 195 A1**
(43) Veröffentlichungstag der Anmeldung: **21.06.2023**
(21) Anmeldenummer: 22207707.5
(22) Anmeldetag: 16.11.2022
(51) Int. Cl.: D21D 5/00, D21F 1/66, D21H 23/00

(54) **VERFAHREN ZUR WIEDERVERWERTUNG VON RESTSTOFFFLUID, WIE STREICHFARBENRESTEN, AUS EINEM PAPIERHERSTELLUNGSPROZESS SOWIE VORRICHTUNG HIERZU**

(30) Priorität: 16.12.2021 AT 510112021
(71) Anmelder: GAW technologies GmbH, 8020 Graz (AT)
(72) Erfinder: Brücke, Nikolaus, 8044 Graz (AT); Schmölzer, Wolfgang, 8152 Stallhofen (AT)
(74) Vertreter: Wirnsberger & Lerchbaum Patentanwälte OG

(57) **Zusammenfassung**

Die Erfindung betrifft ein Verfahren zur Wiederverwertung (1) von Reststofffluid (2), wie Streichfarbenresten, aus einem Papierherstellungsprozess, insbesondere aus einer Streichmaschine für Papiere, wobei Reststofffluid (2) gesammelt, mit einer Konzentrationseinrichtung (4) aufkonzentriert, insbesondere entwässert, und mit einer Zerkleinerungsvorrichtung (7), insbesondere einer Kugelmühle, zerkleinert wird. Zur Optimierung der Wiederverwertung ist vorgesehen, dass das Reststofffluid (2) mit der Konzentrationseinrichtung (4) unter Abtrennung von Abtrennflüssigkeit (9) auf einen Feststoffgehalt von mehr als 25 %, bevorzugt mehr als 50 %, aufkonzentriert wird, wonach das Reststofffluid (2) mit der Zerkleinerungsvorrichtung (7) zerkleinert wird, wonach zumindest eine Fraktion des Reststofffluids (2) wieder einem Papierherstellungsprozess zugeführt wird.

Weiter betrifft die Erfindung eine Vorrichtung zur Wiederverwertung von Reststofffluid (2), wie Streichfarbenresten, aus einem Papierherstellungsprozess.

## Beschreibung

Die Erfindung betrifft ein Verfahren zur Wiederverwertung von Reststofffluid, wie Streichfarbenresten, aus einem Papierherstellungsprozess, insbesondere aus einer Streichmaschine für Papiere, insbesondere Papierprodukte, Karton und/oder Pappe, wobei Reststofffluid gesammelt, mit einer Konzentrationseinrichtung aufkonzentriert, insbesondere entwässert, und mit einer Zerkleinerungsvorrichtung, insbesondere einer Kugelmühle, zerkleinert wird.

Weiter betrifft die Erfindung eine Vorrichtung zur Wiederverwertung von Reststofffluid, wie Streichfarbenresten, aus einem Papierherstellungsprozess, insbesondere aus einer Streichmaschine für Papiere, insbesondere Papierprodukte, Karton und/oder Pappe, wobei die Vorrichtung reststofffluidleitend miteinander verbunden eine Sammeleinheit zur Sammlung von Reststofffluid, eine Konzentrationseinrichtung zur Aufkonzentrierung des Reststofffluids und eine Zerkleinerungsvorrichtung zur Zerkleinerung des Reststofffluids aufweist.

Im Rahmen eines Papierherstellungsprozesses ist es häufig vorgesehen, ein gebildetes Papier mittels Streichmaschinen mit Streichfarben zu bedecken, um gestrichenes Papier herzustellen. Die Streichfarben weißen in der Regel neben Wasser ein oder mehrere Pigmente sowie meist Bindemittel auf. Je nach herzustellendem Papier kann eine andere Streichfarbe eingesetzt sein. Bei einem Wechseln zwischen verschiedenen Streichfarben oder Unterbrechung eines Betriebes einer Streichmaschine, beispielsweise zur Reinigung oder Wartung dieser, fallen in der Regel große Mengen von verunreinigter sowie verdünnter Streichfarbe, als Streichfarbenreste bezeichnet, an, welche häufig als Teil von Abwässern entsorgt werden. Dies kann erhebliche Einsatzmaterialverluste und Entsorgungskosten nach sich ziehen. Es ist bekannt, Streichfarbenreste zu sammeln, zu reinigen und zu zerkleinern, um die Streichfarbenreste auf diese Weise aufzubereiten und dem Papierherstellungsprozess wieder zuzuführen. Üblicherweise ist hierzu vorgesehen, dass die Streichfarbenreste bzw. deren Feststoffe mit einer Mühle zerkleinert und vor deren Rückführung in den Papierherstellungsprozess mit einer oder mehreren Konzentrationseinrichtungen, wie Dekantern, aufkonzentriert bzw. entwässert werden.

Danach können die auf diese Weise aufbereiteten Streichfarbenreste im Rahmen des Papierherstellungsprozesses wieder verwendet werden.

Hier setzt die Erfindung an. Aufgabe der Erfindung ist es, ein Verfahren der eingangs genannten Art zur Wiederverwertung von Reststofffluid aus einem Papierherstellungsprozess anzugeben, welches eine optimierte Wiederverwertung von Reststofffluid aus einem Papierherstellungsprozess ermöglicht.

Weiter ist es Ziel der Erfindung eine Vorrichtung der eingangs genannten Art anzugeben, mit welcher eine optimierte Wiederverwertung von Reststofffluid aus einem Papierherstellungsprozess ermöglicht ist.

Die Aufgabe wird erfindungsgemäß durch ein Verfahren der eingangs genannten Art gelöst, wenn das Reststofffluid mit der Konzentrationseinrichtung unter Abtrennung von Abtrennflüssigkeit auf einen Feststoffgehalt von mehr als 25 %, bevorzugt mehr als 50 %, aufkonzentriert wird, wonach das Reststofffluid mit der Zerkleinerungsvorrichtung zerkleinert wird, wonach zumindest eine Fraktion des Reststofffluids wieder einem Papierherstellungsprozess zugeführt wird.

Grundlage der Erfindung ist die Idee, die Wiederverwertung von Reststofffluid aus einem Papierherstellungsprozess, insbesondere wenn es sich dabei um Streichfarbenreste handelt, ressourcensparend, insbesondere materialsparend und/oder energiesparend, durchzuführen. Es hat sich herausgestellt, dass es von Vorteil ist, wenn zuerst eine starke Aufkonzentrierung bzw. Entwässerung des Reststofffluids, mit entsprechend großen Mengen von vom Reststofffluid abgetrennter Abtrennflüssigkeit durchgeführt und anschließend das schon aufkonzentrierte Reststofffluid mit der Zerkleinerungseinrichtung zerkleinert wird. Dadurch ist einerseits die Aufkonzentrierung bzw. Abtrennung von Abtrennflüssigkeit effizient durchführbar und andererseits die nachgeschaltete Zerkleinerung des Reststofffluids bzw. dessen Feststoffe mit der Zerkleinerungsvorrichtung aufgrund eines hohen Festgehaltes des Reststofffluids, welcher sich als Folge der zuvor durchgeführten starken Aufkonzentrierung ergibt, effizient durchführbar. Insbesondere ist auf diese Weise die Wiederverwertung mit hoher Energieeffizienz umsetzbar. Durch die funktionale Separierung der Konzentrationseinrichtung stromabwärts vor der Zerkleinerungsvorrichtung kann eine effiziente Abtrennung des Abtrennwassers und vorzugsweise ein konstruktiv materialeinsatzreduzierter Aufbau umgesetzt werden. Papier bezeichnet bzw. umfasst üblicherweise Papier bzw. Papierprodukte, Karton und/oder Pappe bzw. umfasst entsprechend ein Papierherstellungsprozess eine Herstellung von Papier bzw. Papierprodukten, Karton und/oder Pappe, üblicherweise mit einer Papierherstellungsanlage. Zweckmäßig kann das Reststofffluid für das Verfahren zur Wiederverwertung aus dem Papierherstellungsprozess bzw. der Papierherstellungsanlage, insbesondere einer oder mehreren Streichmaschinen der Papierherstellungsanlage, stammen bzw. von diesen abgeführt sein.

Eine Energieoptimierung, insbesondere des Gesamtprozesses, ist effizient erreichbar, wenn mit der Konzentrationseinrichtung eine Aufkonzentrierung auf einen Feststoffgehalt des Reststofffluids von mehr als 25 % durchgeführt wird. Besonders deutlich zeigt sich dies bei einer Aufkonzentrierung auf einen Feststoffgehalt des Reststofffluids von mehr als 30 %, vorzugsweise mehr als 40 %. Es hat sich gezeigt, dass ein Effizienzbeitrag der Zerkleinerungsvorrichtung insbesondere bei höheren Feststoffgehalten überproportional zunimmt. Dabei hat sich herausgestellt, dass eine noch höhere Effizienz erreichbar ist, wenn der Feststoffgehalt mehr als 45 %, insbesondere mehr als 50 %, beträgt. In der Anwendung besonders bewährt hat sich ein Feststoffgehalt des Reststofffluids von 50 % bis 70 %, bevorzugt etwa 55 % bis 60 %. Zweckmäßig ist es entsprechend, wenn die Zerkleinerungsvorrichtung ausgelegt ist, Reststofffluid mit derartigen Feststoffgehalten zu verarbeiten bzw. zu zerkleinern, bzw. vorgesehen ist, der Zerkleinerungseinrichtung Reststofffluid mit entsprechenden Feststoffgehalten zur Zerkleinerung zuzuführen. Vorteilhaft kann schließlich eine Ressourcenbilanz, insbesondere Energiebilanz, weiter optimiert werden, wenn vorgesehen ist, dass die Abtrennflüssigkeit, vorzugsweise nach Aufbereitung bzw. Reinigung dieser, für das Verfahren zur Wiederverwertung selbst, beispielsweise zur Temperierung der Zerkleinerungsvorrichtung, und/oder den Papierherstellungsprozess genutzt wird.

Reststofffluid bezeichnet üblicherweise aus dem Papierherstellungsprozess abfallende, meist verunreinigte und/oder verdünnte, Fluide. Das Reststofffluid ist üblicherweise ein Fluid, welches, insbesondere aus dem Papierherstellungsprozess stammende, Reststoffe, beinhaltet. Das Reststofffluid ist vorzugsweise neben Wasser im Wesentlichen mit Füllstoffresten und/oder Streichfarbenresten aus dem Papierherstellungsprozess gebildet.

Üblicherweise wird Füllstoff im Rahmen eines Papierherstellungsprozesses dem Papier zugesetzt, um Eigenschaften, beispielsweise eine Festigkeit, Griffigkeit und/oder Gleichmäßigkeit, eines herzustellenden Papiers zu beeinflussen, insbesondere festzulegen. Der Füllstoff weist meist Kaolin, Calciumcarbonat, insbesondere natürliches oder präzipitiertes Calciumcarbonat, und Aluminiumsilikat auf. Weiter weist der Füllstoff zudem häufig Titandioxid, Dolomit, Talkum und/oder Calciumsilikat auf. Streichfarbe wird üblicherweise im Rahmen eines Papierherstellungsprozesses auf das Papier aufgebracht, um Eigenschaften, wie beispielsweise Bedruckbarkeit und Haptik, einer Oberfläche des Papiers zu beeinflussen, insbesondere festzulegen. Die Streichfarbe wird üblicherweise mit einer oder mehreren Streichmaschinen auf das Papier aufgebracht. In der Regel weist die Streichfarbe neben Wasser zudem Pigmente und meist Bindemittel auf bzw. ist insbesondere im Wesentlichen aus diesen gebildet. Die Pigmente können mit Kaolin und/oder Calciumcarbonat gebildet sein. Füllstoffrest bzw. Streichfarbenrest bezeichnet üblicherweise Füllstoffe bzw. Streichfarben, welche aus dem Papierherstellungsprozess abfallen und in der Regel verunreinigt und/oder, meist mit Wasser, verdünnt sind. Das Reststofffluid, insbesondere die Füllstoffreste bzw. die Streichfarbenreste, sind in der Regel fließfähig, insbesondere gasförmig und/oder flüssig, in der Regel jedoch flüssig ausgebildet.

Das gesammelte Reststofffluid bzw. das dem Verfahren zur Wiederverwertung zugeführte Reststofffluid bzw. dessen Fraktion weist üblicherweise einen Feststoffgehalt von weniger als 15 %, insbesondere weniger als 10 %, in der Regel von 0,2 % bis 6 %, auf.

Es hat sich bewährt, wenn zumindest eine, insbesondere erste, Fraktion der Abtrennflüssigkeit, gegebenenfalls nach Durchlaufen einer Reinigung, üblicherweise mit einer Reinigungsstrecke, wieder einem, insbesondere dem, Papierherstellungsprozess zugeführt wird. Zweckmäßig ist es dabei, wenn die Abtrennflüssigkeit bzw. deren Fraktion wieder dem Papierherstellungsprozess zugeführt wird, aus welchem das Reststofffluid bzw. die Abtrennflüssigkeit stammt. Alternativ oder kumulativ ist es günstig, wenn zumindest eine, insbesondere weitere bzw. zweite, Fraktion der Abtrennflüssigkeit, gegebenenfalls nach Durchlaufen einer Reinigung, üblicherweise mit einer Reinigungsstrecke, zur Temperierung, insbesondere Heizung und/oder Kühlung, der Zerkleinerungsvorrichtung verwendet wird. Dadurch können ein Ressourceneinsatz optimiert bzw. üblicherweise sonst anfallende Entsorgungskosten reduziert werden.

Indem die Aufkonzentrierung der Zerkleinerung vorgeschaltet ist, kann dies besonders einfach und effizient umgesetzt werden. Die erste Fraktion und zweite Fraktion der Abtrennflüssigkeit können durch dieselbe Fraktion von Abtrennflüssigkeit bzw. eine selbe Abtrennflüssigkeitsteilmenge gebildet sein. Zweckmäßig kann im Wesentlichen ein Großteil, insbesondere im Wesentlichen eine Gesamtheit, der Abtrennflüssigkeit derart verwendet werden. Es kann günstig sein, wenn Abtrennflüssigkeit, insbesondere eine weitere Fraktion dieser, gegebenenfalls nach Durchlaufen einer Reinigung, üblicherweise mit einer für den jeweiligen Einsatzzweck geeigneten Reinigungsstrecke, an anderen Einsatzorten und/oder für einen anderen Verwendungszweck für aufbereitete Abtrennflüssigkeit verwendet wird. Ist die Abtrennflüssigkeit im Wesentlichen mit Wasser gebildet, kann diese beispielsweise als Verdünnungswasser oder Prozesswasser verwendet werden. Dadurch können ein Ressourceneinsatz bzw. Energieeinsatz optimiert, insbesondere üblicherweise sonst anfallende Entsorgungskosten einer Abwasseraufbereitungsanlage reduziert werden. Die jeweilige Reinigungsstrecke kann dabei mit der bzw. entsprechend der nachstechend beschriebenen Reinigungsstrecke umgesetzt sein.

Es können mehrere Konzentrationseinrichtungen vorgesehen sein, welche dann vorzugsweise der Zerkleinerungsvorrichtung stromabwärts vorgeschaltet sind. Vorteilhaft ist es, wenn die Zerkleinerung des Reststofffluids mit der Zerkleinerungsvorrichtung stromabwärts nach einer einzigen oder nach einer letzten von mehreren Konzentrationseinrichtungen erfolgt. Dadurch ist ein funktionaler Aufbau mit hoher Effizienz erreichbar. Vorteilhaft ist es, wenn ein Großteil, insbesondere mehr als 60 %, bevorzugt mehr als 75 %, insbesondere bevorzugt mehr als 90 %, einer gesamten Erhöhung des Feststoffgehaltes des Reststofffluids, insbesondere bis zu dessen Zuführung zum Papierherstellungsprozess, stromabwärts vor der Zerkleinerung mit der Zerkleinerungsvorrichtung erfolgt. Ein Maximalgehalt des Feststoffgehaltes beträgt üblicherweise 99,6 %. Die Aufkonzentrierung bzw. Erhöhung des Feststoffgehaltes bemisst sich dabei üblicherweise als prozentuelle Erhöhung des Feststoffgehaltes im Vergleich zum Feststoffgehalt des, insbesondere mit der Sammeleinheit, gesammelten Reststofffluids vor dessen Aufkonzentrierung mit der Konzentrationseinrichtung.

Die Aufkonzentrierung mit der Konzentrationseinrichtung kann mit Sedimentation, Zentrifugieren, Filtrierung, Pressen und/oder Trocknung des Reststofffluids umgesetzt sein, insbesondere einer Kombination mehrerer dieser. Die Sedimentation kann mit einer Sedimentationsanlage, das Zentrifugieren mit einer Zentrifuge, die Filtrierung mit einer Filtrieranlage, das Pressen, beispielsweise mit einer Schneckenpresse und/oder Filterkammerpresse, die Trocknung mit einer Trocknungseinrichtung umgesetzt sein. Zweckmäßig können mehrere dieser reststoffluidleitend miteinander verbunden, insbesondere einander nachgeschaltet sein, um das Reststofffluid aufzukonzentrieren.

Für eine effiziente Aufkonzentrierung ist es günstig, wenn die Konzentrationseinrichtung eine Sedimentationsanlage und/oder eine Zentrifuge, insbesondere einen Dekanter, umfasst, um das Reststofffluid unter Abtrennung der Abtrennflüssigkeit aufzukonzentrieren. Bewährt hat es sich, wenn dabei die Sedimentationsanlage der Zentrifuge stromabwärts vorgeschaltet ist, wobei mit der Sedimentationsanlage eine erste Aufkonzentrierung des Reststofffluids, vorzugsweise auf einen Feststoffgehalt von 20 % oder größer, durchgeführt wird, das Reststofffluid anschließend der Zentrifuge zugeführt wird, welcher das Reststofffluid weiter aufkonzentriert. Ein besonders einfacher Aufbau ist erreichbar, wenn die Fraktion der Abtrennflüssigkeit zur Weiterverwendung, beispielsweise um diese dem Papierherstellungsprozess zuzuführen und/oder zur Temperierung der Zerkleinerungsvorrichtung zu verwenden, mit bzw. aus einer von der Sedimentationsanlage und/oder der Zentrifuge abgetrennten Abtrennflüssigkeit gebildet ist. Besonders die von der Sedimentationsanlage abgetrennte Abtrennflüssigkeit hat sich hierzu bewährt. Vorteilhaft können mehrere Sedimentationsanlagen bzw. Zentrifugen vorgesehen sein. Zweckmäßig kann die Zentrifuge eine Schneckenzentrifuge, insbesondere ein Dekanter, sein. Der Dekanter ist üblicherweise eine Vollmantelschneckenzentrifuge, welche eine kontinuierliche Aufkonzentrierung bzw. Entwässerung ermöglicht.

Es hat sich bewährt, wenn das Reststofffluid zur Entfernung von Verunreinigungen filtriert wird. Eine Filtrierung erfolgt dabei vorzugsweise stromabwärts vor der Zerkleinerung des Reststofffluids mit der Zerkleinerungsvorrichtung, besonders bevorzugt stromabwärts vor der Aufkonzentrierung mit der Konzentrationseinrichtung. Die Filtrierung ist üblicherweise mit einer Filtereinrichtung, umfassend eine oder mehrere Filtereinheiten, welche ausgebildet sind, Verunreinigungspartikel partikelgrößenabhängig zu filtern, ausgebildet. Verschiedene Filtereinheiten können unterschiedliche Ausschlussgrenzen für eine durch eine jeweilige Filtereinheit durchlässige maximale Verunreinigungspartikelgröße aufweisen. Die Filtereinrichtung ist üblicherweise stromabwärts nach der Sammeleinheit, mit welcher das Reststofffluid für eine Zuführung zur Konzentrationseinrichtung gesammelt wird, angeordnet. Zweckmäßig können mehrere solche Filtereinrichtungen vorgesehen sein.

Günstig ist es, wenn die Aufkonzentrierung unter Beimischung von Entwässerungsbeschleunigungsmittel, insbesondere Flockungsmittel, zum Reststofffluid erfolgt. Das Entwässerungsbeschleunigungsmittel bzw. Flockungsmittel ist üblicherweise mit bzw. aus Polymeren gebildet. Zweck des Entwässerungsbeschleunigers, insbesondere Flockungsmittels, ist es ein Verbinden, auch als Ausflocken bezeichnet, insbesondere eine Koagulation und/oder Agglomeration, von mehreren kleinen Bestandteilen des Reststofffluids zu größeren Bestandteilen zu bewirken. Die größeren Bestandteile können dann leichter separiert bzw. aus dem Reststofffluid entfernt werden, beispielsweise im Rahmen der Sedimentationsanlage durch eine schnellere Sedimentation. Das Entwässerungsbeschleunigungsmittel wird dem Reststofffluid vorzugsweise vor oder im Rahmen der Aufkonzentrierung mit der Konzentrationseinrichtung oder insbesondere vor oder im Rahmen der Aufkonzentrierung des Reststofffluids mit der Sedimentationsanlage und/oder der Zentrifuge der Konzentrationseinrichtung beigemischt.

Es hat sich bewährt, wenn das Reststofffluid nach der Aufkonzentrierung des Reststofffluids mit der Konzentrationseinrichtung mit einer Dispergiereinrichtung, insbesondere unter Zufuhr eines Dispergierungsmittels zum Reststofffluid, dispergiert wird. Dabei wird das Reststofffluid üblicherweise durchmischt, vorzugsweise homogenisiert. Die Dispergiereinrichtung ist in der Regel mit einem Dispergierbehälter, in welchen das Reststofffluid einfüllbar ist, und einem Rührarm, mit welchem das Reststofffluid im Dispergierbehälter durchmischbar ist, gebildet. Der Rührarm ist hierzu in der Regel relativ zum Dispergierbehälter rotierbar ausgebildet. Zweckmäßig kann dem Reststofffluid Dispergiermittel zur mechanischen Homogenisierung des Reststofffluids während der Durchmischung beigemengt werden. Das Dispergiermittel, welches häufig pulverförmig ausgebildet ist, kann beispielsweise, ein Salz, insbesondere Polysalz oder Silikat, beispielsweise Natriumsilikat, sein bzw. auf Polymertechnologie basieren. Vorzugsweise ist die Dispergiereinrichtung der Zerkleinerungsvorrichtung stromabwärts vorgeschaltet, insbesondere zwischen die Zentrifuge und die Zerkleinerungsvorrichtung geschaltet. Die Dispergiereinrichtung kann Teil der Zerkleinerungsvorrichtung sein. Zweckmäßig kann dann die Zerkleinerungsvorrichtung eine Mühle und eine solche Dispergiereinrichtung aufweisen, wobei vorzugsweise die Dispergiereinrichtung der Mühle stromabwärts vorgeschaltet ist.

Die Zerkleinerungsvorrichtung ist üblicherweise ausgebildet, Reststofffluid bzw. dessen Feststoffe zu zerkleinern. Zweckmäßig ist es, wenn die Zerkleinerung derart erfolgt, dass eine bestimmte durchschnittliche Feststoffgröße und/oder Feststoffgrößenverteilung der Feststoffe des Reststofffluids erreicht bzw. eingestellt wird. Bewährt hat es sich, wenn eine durchschnittliche Feststoffgröße von weniger 5 µm, insbesondere weniger als 2 µm, bevorzugt weniger als 1 µm, erreicht wird. Dies gilt insbesondere, wenn das Reststofffluid im Wesentlichen mit bzw. aus Streichfarben gebildet ist. Die Zerkleinerungsvorrichtung ist üblicherweise mit einer oder mehreren Mühlen, beispielsweise einer Kugelmühle und/oder Kolloidmühle und/oder Hammermühle, umgesetzt. Dabei werden in der Regel Feststoffe mit einem oder mehreren Mahlkörpern zerkleinert. Vorteilhaft können die Mahlkörper für die Zerkleinerung dem Reststofffluid zugesetzt und insbesondere nach der Zerkleinerung wieder aus dem Reststofffluid entfernt werden. Zweckmäßig kann die Zerkleinerungsvorrichtung mit mehreren, insbesondere seriell oder parallel zueinander geschalteten, Mühlen gebildet sein. Es können mehrere Zerkleinerungsvorrichtungen, insbesondere seriell oder parallel zueinander, geschaltet vorhanden sein.

Besonders vorteilhaft kann das Verfahren zur Wiederverwertung angewendet werden, wenn das Reststofffluid mit bzw. im Wesentlichen aus Streichfarbenresten gebildet ist. Zweckmäßig ist es, wenn das Reststofffluid, insbesondere im Wesentlichen, mit Streichfarbenresten gebildet ist und die dem Papierherstellungsprozess wieder zugeführte Fraktion des Reststofffluids, sowie vorzugsweise eine bzw. die Fraktion der Abtrennflüssigkeit, dem Papierherstellungsprozess zur Herstellung von neuer Streichfarbe zugeführt wird. Dies erfolgt üblicherweise unter Beimischung der Fraktion des Reststofffluids zu Streichfarbe bzw. einer oder mehreren deren Komponenten. Dadurch kann in Bezug auf eine Verwendung von Streichfarben eine hohe Effizienz, insbesondere ein optimierter Materialeinsatz, umgesetzt werden. Zweckmäßig kann das Reststofffluid dabei einer Streichfarbe zugeführt werden, welche mit den Streichfarbenresten des Reststofffluids ähnliche, insbesondere übereinstimmende, Eigenschaften, beispielsweise hinsichtlich einer Farbe und/oder Pigmentgröße, aufweist. Dabei kann es günstig sein, wenn neben der Fraktion des Reststofffluids eine Fraktion der Abtrennflüssigkeit zur Herstellung der neuen Streichfarbe dem Papierherstellungprozess zugeführt wird. Die Fraktion der Abtrennflüssigkeit kann beispielsweise ebenfalls der Streichfarbe bzw. einer oder mehreren deren Komponenten zugemischt werden, etwa um eine Konsistenz und/oder Verdünnung dieser einzustellen. Zweckmäßig kann das Reststofffluid und/oder die Abtrennflüssigkeit bzw. deren Fraktion für eine Pigmentaufbereitung verwendet werden.

Für einen effizienten Betrieb ist es günstig, wenn eine Zerkleinerung des Reststofffluids mit der Zerkleinerungsmaschine in Abhängigkeit von einer mit einem Temperatursensor ermittelten Temperatur des Reststofffluids durchgeführt, insbesondere geregelt, wird. Zweckmäßig ist es, wenn dabei die Temperatur des Reststofffluids während einer Zerkleinerung dieses ermittelt wird. Der Temperatursensor kann zur kontaktlosen, beispielsweise pyrometrischen, Temperaturmessung oder kontaktierenden Temperaturmessung, beispielsweise mit einem Thermoelement, ausgebildet sein. Der Temperatursensor ist üblicherweise als Teil der Zerkleinerungsvorrichtung ausgebildet. Abhängig von der Temperatur kann beispielsweise eine Geschwindigkeit der Zerkleinerung und/oder eine Temperierung des Reststofffluids, gesteuert, insbesondere geregelt, werden. Dies erfolgt üblicherweise mit einer, insbesondere computerunterstützten, Steuereinrichtung. Die Temperierung kann ein Heizen und/oder Kühlung des Reststofffluids, vorzugsweise vor oder während der Zerkleinerung des Reststofffluids, sein. Zweckmäßig können mehrere solche Temperatursensoren vorgesehen sein.

Günstig ist es, wenn eine Temperierungseinrichtung vorgesehen ist, um das Reststofffluid zu temperieren, insbesondere zu heizen und/oder zu kühlen. Die Temperierungseinrichtung kann ausgebildet sein, das Reststofffluid vor und/oder während des Aufkonzentrierens des Reststofffluids mit der Konzentrationseinrichtung zu temperieren. Alternativ oder kumulativ ist es besonders günstig, wenn die Temperierungseinrichtung ausgebildet ist, das Reststofffluid vor und/oder während und/oder nach der Zerkleinerung des Reststofffluids mit der Zerkleinerungsvorrichtung zu temperieren. Bevorzugt ist dabei eine Temperierung während und/oder nach der Zerkleinerung mit der Zerkleinerungsvorrichtung. Die Temperierung des Reststofffluids erfolgt dabei vorzugsweise innerhalb der Zerkleinerungsvorrichtung. Die Temperierungseinrichtung kann hierzu Teil der Konzentrationseinrichtung bzw. Zerkleinerungseinrichtung sein. Zweckmäßig kann die Temperierungseinrichtung mit einer bzw. als Widerstandsheizung, Peltierheizung und/oder Strahlungsheizung ausgebildet sein. Besonders bevorzugt ist die Temperierungseinrichtung dabei als Kühlung ausgebildet. Zweckmäßig kann die Temperierung abhängig von der mit dem Temperatursensor ermittelten Temperatur erfolgen.

Besonders praktikabel ist es, wenn die Temperierungseinrichtung mit zumindest einem Wärmetauscher gebildet ist, um eine Temperierung, insbesondere Heizung und/oder Kühlung, des Reststofffluids mit, insbesondere durch, eine Wärmeübertragung zwischen dem Reststofffluid und dem Wärmetauscher durchzuführen. Zweckmäßig kann die Temperierungseinrichtung mit mehreren solchen Wärmetauschern gebildet sein. Zweckmäßig kann die vorgenannte Temperierung, insbesondere abhängig von der mit dem Temperatursensor ermittelten Temperatur, derart umgesetzt sein. Besonders praktikabel ist es, wenn das Reststofffluid in der Zerkleinerungsvorrichtung, insbesondere während und/oder nach der Zerkleinerung in dieser, mit dem zumindest einen Wärmetauscher temperiert, insbesondere geheizt und/oder gekühlt, wird. Besonders effizient kann auf diese Weise eine Kühlung des Reststofffluids während des Zerkleinerns dieses umgesetzt sein. Der zumindest eine Wärmetauscher weist üblicherweise einen oder mehrere Temperierungsmediumkanäle zur Führung eines Temperierungsmediums, insbesondere Heizmedium bzw. Kühlmedium, auf, um mit dem Temperierungsmedium Wärme vom Reststofffluid weg bzw. zu diesem hin zu transportieren. Das Temperierungsmedium kann gasförmig und/oder flüssig ausgebildet sein, beispielsweise mit Wasser bzw. Wasserdampf. Für eine hohe Effizienz ist es günstig, wenn eine, insbesondere vorgenannte, Fraktion der Abtrennflüssigkeit als Temperierungsmedium verwendet wird. Zweckmäßig können der bzw. die Wärmetauscher als Teil der Zerkleinerungsvorrichtung und/oder dieser nachgeordnet sein.

Praktikabel ist es, wenn der Zerkleinerungsvorrichtung ein oder mehrere Zwischenlagerspeicher stromabwärts nachgeordnet sind, um eine Reststofffluidmenge des Reststofffluids zwischenzulagern. Das zerkleinerte Reststofffluid oder zumindest ein Teil dieses kann dadurch zwischengespeichert werden. Vom Zwischenlagerspeicher kann das Reststofffluid praktikabel zur Verwendung im Rahmen des Papierherstellungsprozesses entnommen werden.

Zweckmäßig ist es, wenn nach der Zerkleinerung des Reststofffluids mit der Zerkleinerungsmaschine eine Reststofffluidmenge des Reststofffluids abhängig von einer die Reststofffluidmenge kennzeichnenden Reststoffmengenklassifikation in einem der Reststoffmengenklassifikation zugeordneten Zwischenlagerspeicher zwischengelagert wird. Die Reststoffmengenklassifikation kann beispielsweise ein Feststoffanteil, eine Feststoffgröße und/oder eine Feststoffart sein. Üblicherweise sind mehrere Zwischenlagerspeicher vorgesehen, wobei verschiedenen Zwischenlagerspeichern unterschiedliche Reststoffmengenklassifikationen zugeordnet sind. Dadurch kann je nach Reststoffmengenklassifikation des jeweiligen Zwischenlagerspeichers eine Reststofffluidmenge mit entsprechender Reststoffmengenklassifikation mit dem Zwischenlagerspeicher zwischengelagert werden.

Günstig ist es, wenn das Verfahren zur Wiederverwertung mit einem computerimplementierten Steuersystem derart gesteuert wird, dass eine Zuführung der Fraktion des Reststofffluids zum Papierherstellungsprozess in Abhängigkeit von einem betriebsabhängigen Bedarf an zuzuführenden Reststofffluid des Papierherstellungsprozesses erfolgt. Der betriebsabhängige Bedarf kann ein aktueller Bedarf sein, um das Reststofffluid im Wesentlichen ohne Zwischenlagerung dem Papierherstellungsprozess zuzuführen, oder ein zeitversetzter Bedarf basierend auf einem zu erwartenden Bedarf, wobei das Reststofffluid üblicherweise zur späteren Verwendung in einem, insbesondere der beschriebenen, Zwischenlagerspeicher zwischengelagert wird.

Vorteilhaft ist es, wenn im Wesentlichen nur Reststofffluid gesammelt wird. Dadurch kann das Verfahren zielgerichtet auf eine Wiederverwertung des Reststofffluids abgestellt werden. Das Reststofffluid betrifft üblicherweise Fluide, welche, insbesondere aus dem Papierherstellungsprozess stammende, Reststoffe, wie Füllstoffreste und/oder Streichfarbenreste, beinhaltet. Ein Sammeln des Reststofffluids erfolgt üblicherweise mit der Sammeleinheit.

Von Vorteil kann ein Verfahren zur Wiederverwertung von Reststofffluid, wie Streichfarbenresten, aus einem Papierherstellungsprozess, insbesondere aus einer Streichmaschine für Papiere, insbesondere Papierprodukte, Karton und/oder Pappe, vorgesehen sein, wobei im Wesentlichen nur Reststofffluid gesammelt wird und danach zumindest eine Fraktion des Reststofffluids, insbesondere zielgerichtet, wieder einem Papierherstellungsprozess zugeführt wird. Andere Fluide, welche keine, insbesondere aus dem Papierherstellungsprozess stammenden, Reststoffe beinhalten, sind dabei in der Regel nicht von Interesse. Auf diese Weise kann gezielt das Reststofffluid optimiert wiederverwertet werden. Zweckmäßig kann vorgesehen sein, dass das Reststofffluid vor dessen Zuführung zum Papierherstellungsprozess mit einer Konzentrationseinrichtung aufkonzentriert, insbesondere entwässert, und mit einer Zerkleinerungsvorrichtung, insbesondere einer Kugelmühle, zerkleinert wird. Weitere Merkmale, insbesondere betreffend eine Aufkonzentrierung und/oder eine Zerkleinerung des Reststofffluids und/oder eine Reinigung von Abtrennflüssigkeit, können wie in diesem Dokument beschrieben, in analoger Weise vorgesehen sein.

Das weitere Ziel wird mit einer Vorrichtung zur Wiederverwertung von Reststofffluid der eingangs genannten Art gelöst, wenn die Konzentrationseinrichtung ausgebildet ist, dass Reststofffluid unter Abtrennung von Abtrennflüssigkeit auf einen Feststoffgehalt von mehr als 30 %, bevorzugt mehr als 50 %, aufzukonzentrieren, und wobei die Zerkleinerungsvorrichtung der Konzentrationseinrichtung stromabwärts nachgeschaltet ist. Wie, insbesondere vorgenannt ausgeführt, kann dadurch eine optimierte Wiederverwertung, insbesondere mit ausgeprägter Effizienz, umgesetzt werden. Es versteht sich, dass die Vorrichtung dabei entsprechend den hier, insbesondere vorstehend, im Rahmen des Verfahrens beschriebenen Merkmalen und Wirkungen ausgebildet sein kann, und umgekehrt.

Vorteilhaft kann vorgesehen sein, dass die Zerkleinerungsvorrichtung einer einzigen oder einer letzten von mehreren Konzentrationseinrichtungen zur Aufkonzentrierung des Reststofffluids stromabwärts nachgeschaltet ist. Es kann günstig sein, wenn mehrere Konzentrationseinrichtungen vorhanden sind, um mit diesen eine Aufkonzentrierung des Reststofffluids durchzuführen. Die Konzentrationseinrichtungen können dabei jeweils entsprechend einer hier, insbesondere vorstehend, beschriebenen Konzentrationseinrichtung ausgebildet sein. Es versteht sich, dass verschiedene Konzentrationseinrichtungen dabei unterschiedlich umgesetzt sein können. Eine hohe Effizienz ist erreichbar, wenn die Zerkleinerungsvorrichtung stromabwärts den Konzentrationseinrichtungen nachgeschaltet ist, sodass eine Aufkonzentrierung des Reststofffluids im Wesentlichen stromabwärts vor der Zerkleinerungsvorrichtung erfolgt.

Dadurch ist sowohl die Aufkonzentrierung als auch die Zerkleinerung effizient durchführbar. Es versteht sich, dass mehrere Zerkleinerungsvorrichtungen vorgesehen sein können, welche bevorzugt der bzw. den Konzentrationseinrichtungen stromabwärts nachgeordnet sind.

Die Sammeleinheit zur Sammlung des Reststofffluids ist üblicherweise als Grube oder Tank ausgebildet. Es versteht sich, dass es günstig ist, wenn mit der Sammeleinheit im Wesentlichen Reststofffluid gesammelt wird.

Die Vorrichtung zur Wiederverwertung ist üblicherweise derart ausgebildet, dass diese mit einer zur Durchführung eines Papierherstellungsprozesses ausgebildeten Papierherstellungsanlage reststofffluidleitend verbindbar bzw. verbunden ist, um das Reststofffluid bzw. zumindest eine Fraktion des Reststofffluids der Papierherstellungsanlage für eine Verwendung im Papierherstellungsprozess zuzuführen.

Günstig ist es, wenn die Konzentrationseinrichtung eine Sedimentationsanlage und/oder eine Zentrifuge, insbesondere einen Dekanter, umfasst, um das Reststoffkonzentrat unter Abtrennung der Abtrennflüssigkeit aufzukonzentrieren, wobei vorzugsweise die Zentrifuge der Sedimentationsanlage stromabwärts nachgeschaltet ist. Zweckmäßig können mehrere Sedimentationsanlagen bzw. mehrere Zentrifugen, insbesondere Dekanter, vorgesehen sein. Mehrere Sedimentationsanlagen bzw. Zentrifugen können dabei seriell oder parallel zueinander ausgebildet sein, wobei bevorzugt die Zentrifugen den Sedimentationsanlagen stromabwärts nachgeordnet sind.

Für eine praktikable Weiterverwendung der Abtrennflüssigkeit ist es günstig, wenn eine Reinigungsstrecke zur Reinigung der Abtrennflüssigkeit vorhanden ist, wobei die Reinigungsstrecke zur Aufnahme der Abtrennflüssigkeit an die Konzentrationseinrichtung stromabwärts anschließt, wobei die Reinigungsstrecke eine Desinfektionseinheit zur Desinfektion der Abtrennflüssigkeit und/oder eine Filtereinheit zur Filterung der Abtrennflüssigkeit aufweist. Zweckmäßig ist es entsprechend, wenn die Abtrennflüssigkeit in der Reinigungsstrecke desinfiziert und/oder gefiltert wird. Eine Desinfektion der Abtrennflüssigkeit kann mit Bestrahlung der Abtrennflüssigkeit mit elektromagnetischer Strahlung und/oder einer Zufuhr eines Desinfektionsmittels zur Abtrennflüssigkeit erfolgen. Die elektromagnetische Strahlung ist in der Regel eine UV-Strahlung. Das Desinfektionsmittel kann ein Desinfektionsgas und/oder eine Desinfektionsflüssigkeit, beispielsweise umgesetzt mit Chlor, sein. Zweckmäßig kann die Desinfektionseinheit hierzu eine Strahlungsdesinfektionseinrichtung zur Bestrahlung der Abtrennflüssigkeit mit der elektromagnetischen Strahlung und/oder eine Desinfektionsmittelzufuhreinrichtung zur Zufuhr des Desinfektionsmittels zur Abtrennflüssigkeit aufweisen. Es versteht sich, dass die Reinigungsstrecke mehrere Strahlungsdesinfektionseinrichtungen bzw. Desinfektionsmittelzufuhreinrichtungen aufweisen kann. Die Filtereinheit ist üblicherweise ausgebildet, die Abtrennflüssigkeit partikelgrößenabhängig zu filtern. Zweckmäßig kann die Filtereinheit mit mehreren Filterstufen gebildet sein, wobei verschiedene Filterstufen unterschiedliche Ausschlussgrenzen für eine durch den Filter durchlässige maximale Partikelgröße aufweisen. Zweckmäßig kann eine erste Filterstufe mit einer Ausschlussgrenze von 100 nm oder größer und dieser stromabwärts nachgeschaltet eine zweite Filterstufe und/oder dritte Filterstufe vorgesehen sein, wobei die zweite Filterstufe eine Ausschlussgrenze zwischen 2 nm und 100 nm und die dritte Filterstufe eine Ausschlussgrenze von weniger als 2 nm aufweist.

Vorteilhaft ist es, wenn der Abtrennflüssigkeit in der Reinigungsstrecke ein Antifouling-Mittel zugefügt wird, um in der Abtrennflüssigkeit ein Wachstum bzw. eine Vermehrung von Organismen, insbesondere Mikroorganismen, zu unterbinden. Die Organismen können Pflanzen, insbesondere Algen, Pilze, Bakterien, Viren, oder tierische Lebewesen sein. Das Antifouling-Mittel kann ein Biozid sein.

Von Vorteil ist es, wenn die Abtrennflüssigkeit bzw. eine oder mehrere Fraktionen der Abtrennflüssigkeit stromabwärts nach der Reinigungsstrecke einem Papierherstellungsprozess zugeführt werden. Der Papierherstellungsprozess kann jener Papierherstellungsprozess sein, aus welchem die Abtrennflüssigkeit stammt. Für eine Ressourceneffizienz ist es günstig, wenn die Abtrennflüssigkeit, insbesondere wenn diese im Wesentlichen mit Wasser gebildet ist, einer Streichküche für einen Aufbringprozess von Streichfarbe auf Papier, einer Stärkeaufbereitungsstation für eine Aufbereitung von Stärke und/oder eine Pulper des Papierherstellungsprozesses zugeführt wird. Die Streichküche umfasst dabei in der Regel eine oder mehrere Streichmaschinen, mit welchen Streichfarbe auf Papier aufbringbar ist. Besonders bevorzugt ist es, wenn die Abtrennflüssigkeit bzw. eine Fraktion dieser einem Kesselspeisewasser des Papierherstellungsprozesses zugeführt wird. Kesselspeisewasser dient üblicherweise einer Dampferzeugung im Rahmen des Papierherstellungsprozesses. Die Abtrennflüssigkeit wird dabei üblicherweise einem das Kesselspeisewasser führende Kesselspeisewassersystem der Papierherstellungsprozessanlage zugeführt.

Zweckmäßig kann es sein, wenn die Abtrennflüssigkeit bzw. eine deren Fraktionen vor einem Zuführen zum Papierherstellungsprozess temperiert, insbesondere gekühlt oder geheizt, wird. Hierzu kann eine Temperierungseinheit vorhanden sein, welche bevorzugt der Reinigungsstrecke stromabwärts nachgeschaltet ist. Zweckmäßig kann die Temperierungseinheit mit einer bzw. als Widerstandsheizung, Peltierheizung und/oder Strahlungsheizung ausgebildet sein. Besonders praktikabel ist es, wenn die Temperierungseinheit mit zumindest einem Wärmetauscher gebildet ist, um eine Temperierung, insbesondere Heizung und/oder Kühlung, der Abtrennflüssigkeit bzw. deren Fraktion mit, insbesondere durch, eine Wärmeübertragung zwischen der Abtrennflüssigkeit und dem Wärmetauscher durchzuführen. Zweckmäßig kann der Wärmetauscher für eine Wärmeübertragung zwischen Abtrennflüssigkeit und Reststofffluid während oder nach der Zerkleinerung des Reststofffluids mit der Zerkleinerungsvorrichtung ausgebildet sein. Hierzu kann der Wärmetauscher der Temperierungseinheit mit dem Wärmetauscher der Temperierungseinrichtung wärmeübertragend gekoppelt sein oder diesem entsprechen.

Zur Bewegung des Reststofffluids durch das Verfahren bzw. die Vorrichtung zur Wiederverwertung erfolgt üblicherweise mit einer oder mehreren Pumpen.

Weitere Merkmale, Vorteile und Wirkungen ergeben sich aus den nachfolgend dargestellten Ausführungsbeispielen. In den Zeichnungen, auf welche dabei Bezug genommen wird, zeigen:
Fig. 1 ein Ablaufdiagramm eines Verfahrens zur Wiederverwertung von Reststofffluid aus einem Papierherstellungsprozess;
Fig. 2 ein Ablaufdiagramm eines weiteren Verfahrens zur Wiederverwertung von Reststofffluid aus einem Papierherstellungsprozess.

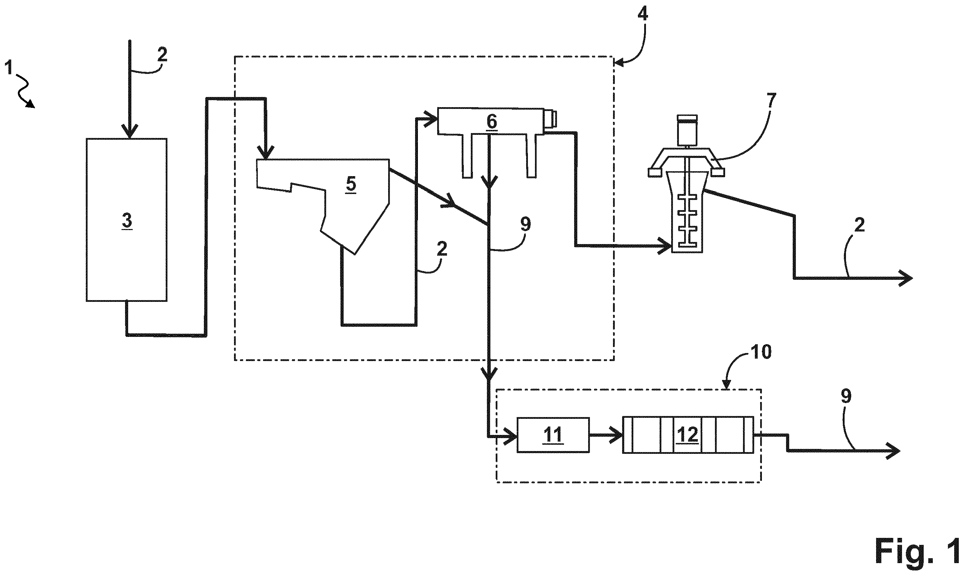

In Fig. 1 ist eine schematische Darstellung eines Verfahrens bzw. einer Vorrichtung zur Wiederverwertung 1 von Reststofffluid 2 aus einem Papierherstellungsprozess dargestellt.

Das Reststofffluid 2 ist insbesondere mit bzw. aus Streichfarbenresten gebildet, welche verdünnte und/oder verschmutzte Streichfarben üblicherweise aus einer Streichküche bzw. Streichmaschine zum Bestreichen von Papier mit Streichfarbe stammen. In der Regel fallen erhebliche Mengen von solchen Streichfarbenresten bei einem Papierherstellungsprozess an. Reststofffluid 2 wird üblicherweise mit einer Sammeleinheit 3 gesammelt, um dieses anschließend aufzubereiten. Das Verfahren zur Wiederverwertung bzw. die Sammlung des Reststofffluids 2 kann als vom Papierherstellungsprozess zeitlich entkoppelter Prozess oder zeitparallel zum Papierherstellungsprozess, und insbesondere kontinuierlich, erfolgen. Das gesammelte Reststofffluid 2 wird anschließend zu einer Konzentrationseinrichtung 4 geleitet, um das Reststofffluid 2 mit dieser aufzukonzentrieren, insbesondere zu entwässern. Dies erfolgt unter Abtrennung von Abtrennflüssigkeit 9, in der Regel im Wesentlichen Wasser, vom Reststofffluid 2, wodurch ein Feststoffgehalt des Reststofffluids 2 erhöht wird. Die Konzentrationseinrichtung 4 kann vorteilhaft mit einer Sedimentationsanlage 5 und einem Dekanter 6 gebildet sein, welche üblicherweise seriell nacheinander geschaltet sind. Üblicherweise wird stromabwärts zuerst eine Aufkonzentrierung des Reststofffluids 2 mit der Sedimentationsanlage 5 und anschließend eine weitere Aufkonzentrierung des Reststofffluids 2 mit der Zentrifuge durchgeführt. Dies erfolgt in der Regel jeweils unter Abtrennung von Abtrennflüssigkeit 9 vom Reststofffluid 2. Stromabwärts nach der Aufkonzentrierung mit der Konzentrationseinrichtung 4 wird das Reststofffluid 2 zu einer Zerkleinerungsvorrichtung 7 geleitet, um das Reststofffluid 2 mit dieser zu zerkleinern. Das zerkleinerte Reststofffluid 2 oder zumindest eine Fraktion dieses kann anschließend wieder einem Papierherstellungsprozess bzw. einer Papierherstellungsanlage, mit welcher der Papierherstellungsprozess durchführbar ist, insbesondere dem Papierherstellungsprozess, aus welchem das Reststofffluid 2 stammt, zugeführt werden.

Vorgesehen ist, dass das Reststofffluid 2 mit der Konzentrationseinrichtung 4 auf einen Feststoffgehalt des Reststofffluids 2 von mehr als 25 %, bevorzugt mehr 50 %, aufkonzentriert wird, sodass anschließend eine Zerkleinerung des Reststofffluids 2 bei entsprechend hohen Feststoffgehalt des Reststofffluids 2 durchgeführt wird. Aufgrund der funktionalen Separierung der Aufkonzentrierung vor der Zerkleinerung, wobei eine hohe Aufkonzentrierung bzw. Abtrennung von großen Abtrennflüssigkeitsmengen vorgesehen ist, kann die Aufkonzentrierung mit reduziertem Aufwand und hoher Energieeffizienz durchgeführt werden. Indem als Folge der hohen Aufkonzentrierung bereits ein hoher Feststoffgehalt des Reststofffluids 2 bei dessen Zerkleinerung vorliegt, kann die Zerkleinerung mit der Zerkleinerungvorrichtung mit hoher Energieeffizienz erfolgen, wobei außerdem als Folge der bereits erfolgten Abtrennung von großen Abtrennflüssigkeitsmengen geringere Reststofffluidmengen mit der Zerkleinerungsvorrichtung 7 verarbeitet werden müssen und insbesondere entsprechend die Zerkleinerungsvorrichtung kleiner dimensioniert sein kann. Dies kann umgesetzt sein, indem die Zerkleinerungsvorrichtung 7 der einzig vorhandenen Konzentrationseinrichtung 4 oder nach einer letzten von mehreren Konzentrationseinrichtungen 4 stromabwärts nachgeordnet ist. Vorzugsweise erfolgt mit der Sedimentationsanlage 5 eine Aufkonzentrierung des Reststofffluids auf einen Feststoffgehalt von mindestens 20 %. Mit der anschließenden weiteren Aufkonzentrierung wird der Feststoffgehalt besonders bevorzugt auf einen Feststoffgehalt von mehr als 25 %, besonders bevorzugt mehr als 50 %, erhöht, bevor das Reststofffluid der Zerkleinerungsvorrichtung 7 für die Zerkleinerung des Reststofffluids zugeführt wird.

Für eine weitere Erhöhung der Effizienz kann vorteilhaft die Abtrennflüssigkeit 9 oder zumindest eine Fraktion der Abtrennflüssigkeit 9 wieder einem Papierherstellungsprozess, insbesondere dem Papierherstellungsprozess aus dem das Reststofffluid 2 stammt, zugeführt werden. Hierzu kann Abtrennflüssigkeit 9 verwendet werden, welche bei einer Aufkonzentrierung mit der Sedimentationsanlage 5 und/oder dem Dekanter 6 vom Reststofffluid 2 abgetrennt wird. Für eine materialeinsatzarme Ausgestaltung ist es günstig, wenn hierzu lediglich Abtrennflüssigkeit 9 verwendet wird, welche bei der Aufkonzentrierung mit der Sedimentationsanlage 5 vom Reststofffluid 2 abgetrennt wird. Im Besonderen kann dann eine übrige Abtrennflüssigkeit 9, beispielsweise Abtrennflüssigkeit 9, welche durch eine Aufkonzentrierung mit dem Dekanter 6 abgetrennt wird, einer Entsorgung zugeführt bzw. nicht funktional weiterverwendet werden oder einer anderen funktionalen Verwendung, gegebenenfalls nach Reinigung mit einer, insbesondere nachstehend beschriebenen, Reinigungsstrecke 10, zugeführt werden.

Zweckmäßig ist es, wenn die dem Papierherstellungsprozess zuzuführende Abtrennflüssigkeit 9 vor Zuführung dieser zum Papierherstellungsprozess mit einer Reinigungsstrecke 10 aufbereitet, insbesondere gereinigt, wird. Die Reinigungsstrecke 10 kann hierzu eine Desinfektionseinheit 11 und/oder eine Filtereinheit 12 aufweisen. Diese können nacheinander geschaltet sein, wobei die Desinfektionseinheit 11 vorzugsweise stromabwärts der Filtereinheit 12 vorgeschaltet ist. Die Desinfektionseinheit 11 kann beispielsweise mit einer bzw. als UV-Strahlungs-Desinfektionseinheit 11 ausgebildet sein, um Abtrennwasser durch Bestrahlung mit UV-Strahlung zu desinfizieren. Die Filtereinheit 12 kann mehrere nacheinander geschaltete Filterstufen, insbesondere mit unterschiedlichen Ausschlussgrenzen für maximal durchlässige Partikel, aufweisen. Vorteilhaft ist es, wenn die Abtrennflüssigkeit 9 im Wesentlichen mit Wasser gebildet ist. Zweckmäßig kann die Abtrennflüssigkeit 9 bzw. zumindest eine Fraktion dieser einer Streichküche, Stärkeaufbereitungsstation, einem Pulper und/oder Kesselspeicherwasser des Papierherstellungsprozesses bzw. der Papierherstellungsanlage zugeführt werden. Auf diese Weise ist eine vorteilhaft optimierte Energiebilanz und Ressourceneinsatzbilanz mit dem Verfahren zur Wiederverwertung des Reststofffluids 2 bzw. einer entsprechenden Vorrichtung erreichbar.

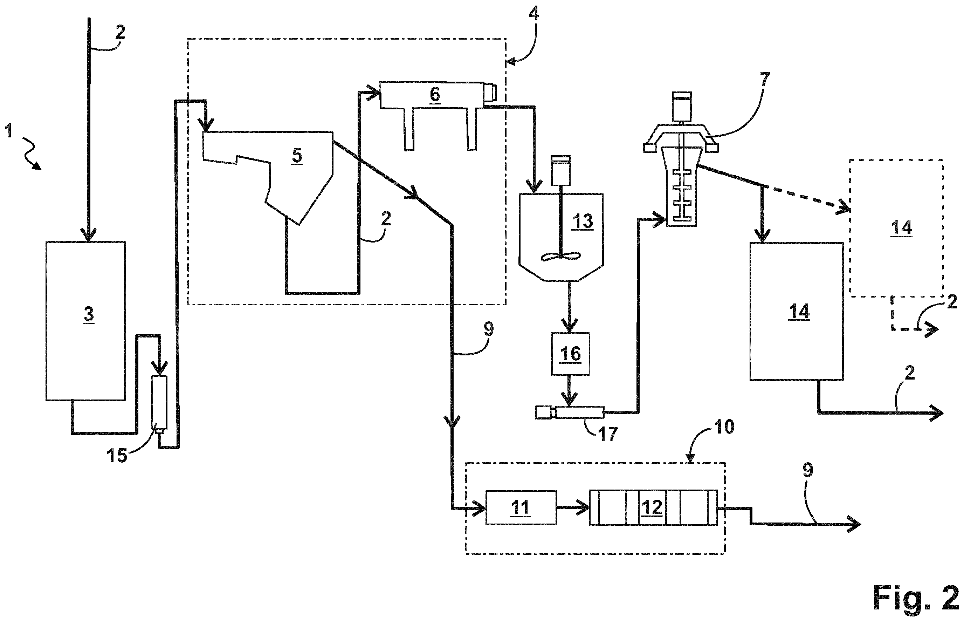

In Fig. 2 ist eine schematische Darstellung eines weiteren Verfahrens bzw. einer weiteren Vorrichtung zur Wiederverwertung 1 von Reststofffluid 2 aus einem Papierherstellungsprozess dargestellt. Das gemäß Fig. 2 gezeigte Verfahren bzw. die entsprechende Vorrichtung entspricht dem Aufbau jener der Fig. 1 mit den entsprechenden Wirkungen. Im Unterschied zur Ausgestaltung gemäß Fig. 1 ist der Konzentrationseinrichtung 4 eine Dispergiereinrichtung 13 stromabwärts nachgeschaltet. Mit der Dispergiereinrichtung 13 wird das Reststofffluid 2 durchmischt, häufig unter Zufuhr eines Dispergierungsmittels, insbesondere Mahlhilfsmittels, homogenisiert. Die Dispergiereinrichtung 13 weist üblicherweise einen beweglichen, meist rotierbaren, Rührarm auf, mit welchem das Reststofffluid 2 durchmischbar ist. Für eine praktikable Reststofffluidsteuerung kann zwischen der Konzentrationseinrichtung 4 und der Zerkleinerungsvorrichtung 7 ein Transfertank zur zwischenzeitlichen Sammlung von Reststofffluids 2 vorhanden sein. Der Transfertank übernimmt Reststofffluid 2 von der Konzentrationseinrichtung 4, insbesondere der Dispergiereinrichtung 13, und führt diese anschließend der Zerkleinerungsvorrichtung 7 zu.

Es versteht sich, dass die im Rahmen des Verfahrens bzw. der Vorrichtung der Fig. 2 beschriebenen Bauteile bzw. Merkmale jeweils einzeln auch im Rahmen des Verfahrens bzw. der Vorrichtung der Fig. 1 mit entsprechenden Merkmalen und Wirkungen umgesetzt sein können.

Bevorzugt kann eine der Reinigungsstrecke 10, und insbesondere nachfolgend dem Papierherstellungsprozess, zugeführte Abtrennflüssigkeit 9 lediglich Abtrennflüssigkeit 9 sein, welche bei einer Aufkonzentrierung mit der Sedimentationsanlage 5 vom Reststofffluid 2 abgetrennt wird, dies ist in Fig. 2 dargestellt. Alternativ kann die der Reinigungsstrecke 10 zugeführte Abtrennflüssigkeit 9 mit Abtrennflüssigkeit 9 gebildet sein, welche durch eine Aufkonzentrierung mit der Sedimentationsanlage 5 vom Reststofffluid 2 abgetrennt ist und mit Abtrennflüssigkeit 9 gebildet sein, welche durch eine Aufkonzentrierung mit dem Dekanter 6 vom Reststofffluid 2 abgetrennt ist, wie beispielsweise in Fig. 1 dargestellt.

Von Vorteil ist es, wenn eine Filtereinrichtung 15 zur Filtrierung des Reststofffluids 2 vorhanden ist. Die Filtereinrichtung 15 ist vorzugsweise stromabwärts der Konzentrationseinrichtung 4 vorgelagert. Es können auch mehrere solche Filtereinrichtungen 15 vorhanden sein.

Eine Bewegung bzw. ein Antrieb des Reststofffluids 2 erfolgt üblicherweise mit einer oder mehreren Pumpen 17. Eine solche Pumpe 17 kann beispielsweise der Konzentrationseinrichtung 4 stromabwärts vor und/oder nachgeordnet sein. Bewährt hat es sich, wenn eine solche Pumpe 17 zwischen der Konzentrationseinrichtung 4 und der Zerkleinerungsvorrichtung 7, vorzugsweise der Dispergiereinrichtung 13 stromabwärts nachgeordnet, ist.

Praktikabel ist es, wenn der Zerkleinerungsvorrichtung 7 ein oder mehrere Zwischenlagerspeicher 14 stromabwärts nachgeordnet sind, um das zerkleinerte Reststofffluid 2 zwischenzulagern. Vom Zwischenlagerspeicher 14 kann das Reststofffluid 2 praktikabel zur Verwendung im Rahmen des Papierherstellungsprozesses entnommen werden.

Die spezielle Ausgestaltung, mit einer der Konzentrationseinrichtung 4 stromabwärts nachgeordneten Zerkleinerungsvorrichtung 7, um zuerst mit hoher Effizienz eine starke Aufkonzentrierung des Reststofffluids 2 durchzuführen, und anschließend mit der Zerkleinerungsvorrichtung 7 das Reststofffluid 2 bei aufgrund der vorherigen starken Aufkonzentrierung hohen Feststoffgehalt zu zerkleinern, ermöglicht eine Wiederverwertung des Reststofffluids 2 im Papierherstellungsprozess mit hoher Effizienz, insbesondere eine Optimierung einer Energiebilanz des Verfahrens. Diese ist noch weiter optimierbar, wenn die im Rahmen der Aufkonzentrierung abgetrennte Abtrennflüssigkeit 9 aufbereitet wird, um diese ebenfalls wieder dem Papierherstellungsprozess zuzuführen.

## Patentansprüche

1. Verfahren zur Wiederverwertung (1) von Reststofffluid (2), wie Streichfarbenresten, aus einem Papierherstellungsprozess, insbesondere aus einer Streichmaschine für Papiere, insbesondere Papierprodukte, Karton und/oder Pappe, wobei Reststofffluid (2) gesammelt, mit einer Konzentrationseinrichtung (4) aufkonzentriert, insbesondere entwässert, und mit einer Zerkleinerungsvorrichtung (7), insbesondere einer Kugelmühle, zerkleinert wird, **dadurch gekennzeichnet, dass** das Reststofffluid (2) mit der Konzentrationseinrichtung (4) unter Abtrennung von Abtrennflüssigkeit (9) auf einen Feststoffgehalt von mehr als 25 %, bevorzugt mehr als 50 %, aufkonzentriert wird, wonach das Reststofffluid (2) mit der Zerkleinerungsvorrichtung (7) zerkleinert wird, wonach zumindest eine Fraktion des Reststofffluids (2) wieder einem Papierherstellungsprozess zugeführt wird.

2. Verfahren nach Anspruch 1, **dadurch gekennzeichnet, dass** zumindest eine Fraktion der Abtrennflüssigkeit (9), gegebenenfalls nach Durchlaufen eines Reinigungsprozesses, wieder einem Papierherstellungsprozess zugeführt wird.

3. Verfahren nach Anspruch 1 oder 2, **dadurch gekennzeichnet, dass** die Zerkleinerung des Reststofffluids (2) mit der Zerkleinerungsvorrichtung (7) stromabwärts nach einer einzigen oder nach einer letzten von mehreren Konzentrationseinrichtungen (4) erfolgt.

4. Verfahren nach einem der Ansprüche 1 bis 3, **dadurch gekennzeichnet, dass** die Konzentrationseinrichtung (4) eine Sedimentationsanlage (5) und/oder einer Zentrifuge, insbesondere einen Dekanter (6), umfasst, um das Reststofffluid (2) unter Abtrennung der Abtrennflüssigkeit (9) aufzukonzentrieren.

5. Verfahren nach einem der Ansprüche 1 bis 4, **dadurch gekennzeichnet, dass** die Aufkonzentrierung unter Beimischung von Entwässerungsbeschleunigungsmittel, insbesondere Flockungsmittel, zum Reststofffluid (2) erfolgt.

6. Verfahren nach einem der Ansprüche 1 bis 5, **dadurch gekennzeichnet, dass** das Reststofffluid (2) vor dem Zerkleinern des Reststofffluids (2) mit der Zerkleinerungsvorrichtung (7) mit einer Dispergiereinrichtung (13), insbesondere unter Zufuhr eines Dispergierungsmittels zum Reststofffluid (2), dispergiert wird.

7. Verfahren nach einem der Ansprüche 1 bis 6, **dadurch gekennzeichnet, dass** das Reststofffluid (2) mit Streichfarbenresten gebildet ist und die dem Papierherstellungsprozess wieder zugeführte Fraktion des Reststofffluids (2), sowie vorzugsweise eine Fraktion der Abtrennflüssigkeit (9), dem Papierherstellungsprozess zur Herstellung von neuer Streichfarbe, insbesondere unter Beimischung der Fraktion des Reststofffluids (2) zu Streichfarbe, zugeführt wird.

8. Verfahren nach einem der Ansprüche 1 bis 7, **dadurch gekennzeichnet, dass** eine Zerkleinerung des Reststofffluids (2) mit der Zerkleinerungsmaschine in Abhängigkeit von einer mit einem Temperatursensor ermittelten Temperatur des Reststofffluids (2) durchgeführt, insbesondere geregelt, wird.

9. Verfahren nach einem der Ansprüche 1 bis 8, **dadurch gekennzeichnet, dass** eine Temperierungseinrichtung vorgesehen ist, um das Reststofffluid (2) zu temperieren, insbesondere zu heizen und/oder zu kühlen.

10. Verfahren nach einem der Ansprüche 1 bis 9, **dadurch gekennzeichnet, dass** nach der Zerkleinerung des Reststofffluids (2) mit der Zerkleinerungsmaschine eine Reststofffluidmenge abhängig von einer die Reststofffluidmenge kennzeichnenden Reststoffmengenklassifikation in einem der Reststoffmengenklassifikation zugeordneten Zwischenlagerspeicher (14) zwischengelagert wird.

11. Verfahren nach einem der Ansprüche 1 bis 10, **dadurch gekennzeichnet, dass** das Verfahren zur Wiederverwertung mit einem Steuersystem computerimplementiert derart gesteuert wird, dass eine Zuführung der Fraktion des Reststofffluids (2) zum Papierherstellungsprozess in Abhängigkeit von einem betriebsabhängigen Bedarf an zuzuführenden Reststofffluid (2) des Papierherstellungsprozesses erfolgt.

12. Verfahren zur Wiederverwertung (1) von Reststofffluid (2), wie Streichfarbenresten, aus einem Papierherstellungsprozess, insbesondere aus einer Streichmaschine für Papiere, insbesondere Papierprodukte, Karton und/oder Pappe, **dadurch gekennzeichnet, dass** im Wesentlichen nur Reststofffluid (2) gesammelt wird und danach zumindest eine Fraktion des Reststofffluids (2) wieder einem Papierherstellungsprozess zugeführt wird.

13. Vorrichtung zur Wiederverwertung von Reststofffluid (2), wie Streichfarbenresten, aus einem Papierherstellungsprozess, insbesondere aus einer Streichmaschine für Papiere, wie Papierprodukte, Karton und/oder Pappe, insbesondere zur Durchführung eines Verfahrens gemäß einem der Ansprüche 1 bis 12, wobei die Vorrichtung reststofffluidleitend miteinander verbunden eine Sammeleinheit (3) zur Sammlung von Reststofffluid (2), eine Konzentrationseinrichtung (4) zur Aufkonzentrierung des Reststofffluids (2) und eine Zerkleinerungsvorrichtung (7) zur Zerkleinerung des Reststofffluids (2) aufweist, **dadurch gekennzeichnet, dass** die Konzentrationseinrichtung (4) ausgebildet ist, dass Reststofffluid (2) unter Abtrennung von Abtrennflüssigkeit (9) auf einen Feststoffgehalt von mehr als 25 %, bevorzugt mehr als 50 %, aufzukonzentrieren, und wobei die Zerkleinerungsvorrichtung (7) der Konzentrationseinrichtung (4) stromabwärts nachgeschaltet ist.

14. Vorrichtung nach Anspruch 13, **dadurch gekennzeichnet, dass** die Zerkleinerungsvorrichtung (7) einer einzigen oder einer letzten von mehreren Konzentrationseinrichtungen (4) zur Aufkonzentrierung des Reststofffluids (2) stromabwärts nachgeschaltet ist.

15. Vorrichtung nach Anspruch 13 oder 14, **dadurch gekennzeichnet, dass** die Konzentrationseinrichtung (4) eine Sedimentationsanlage (5) und/oder eine Zentrifuge, insbesondere einen Dekanter (6), umfasst, um das Reststoffkonzentrat unter Abtrennung der Abtrennflüssigkeit (9) aufzukonzentrieren, wobei vorzugsweise die Zentrifuge der Sedimentationsanlage (5) stromabwärts nachgeschaltet ist.

16. Vorrichtung nach einem der Ansprüche 13 bis 15, **dadurch gekennzeichnet, dass** eine Reinigungsstrecke (10) zur Reinigung der Abtrennflüssigkeit (9) vorhanden ist, wobei die Reinigungsstrecke (10) zur Aufnahme der Abtrennflüssigkeit (9) an die Konzentrationseinrichtung (4) stromabwärts anschließt, wobei die Reinigungsstrecke (10) eine Desinfektionseinheit (11) zur Desinfektion der Abtrennflüssigkeit (9) und/oder eine Filtereinheit (12) zur Filterung der Abtrennflüssigkeit (9) aufweist.
